# EUROPÄISCHE PATENTSCHRIFT

(11) **EP 3 615 369 B1**
(45) Veröffentlichungstag und Bekanntmachung des Hinweises auf die Patenterteilung: **11.05.2022**
(21) Anmeldenummer: 18769041.7
(22) Anmeldetag: 22.08.2018
(51) Int. Cl.: B60K 37/06, B60K 37/04, B60R 13/02

(54) **SICHTTEIL, INSBESONDERE FÜR EIN BEDIENELEMENT IN EINEM KRAFTFAHRZEUG**
VISIBLE PART, IN PARTICULAR FOR AN OPERATING ELEMENT IN A MOTOR VEHICLE
PARTIE VISIBLE, NOTAMMENT POUR UN ÉLÉMENT DE COMMANDE DANS UN VÉHICULE AUTOMOBILE

(30) Priorität: 01.09.2017 DE 102017120152
(43) Veröffentlichungstag der Anmeldung: 04.03.2020
(73) Patentinhaber: PREH GmbH, 97616 Bad Neustadt a.d. Saale (DE)
(72) Erfinder: STEINMÜLLER, Holger, 97618 Unsleben (DE); SCHRÖDER, Thomas, 98617 Meiningen (DE)
(74) Vertreter: Lohmanns, Bernard
(86) Internationale Anmeldenummer: PCT/EP2018/072624
(87) Internationale Veröffentlichungsnummer: WO 2019/042833

(56) Entgegenhaltungen:
- WO-A1-2008/101521
- JP-A- 2005 227 108
- JP-B2- 4 098 501

## Beschreibung

Die Erfindung betrifft ein Sichtteil, insbesondere ein symboltragendes Sichtteil insbesondere als Komponente für ein Bedienelement für Steuergeräte und Aggregate in Kraftfahrzeugen. In Kraftfahrzeugen sind heutzutage eine Vielzahl von Bedienfunktionen einzustellen. Dabei ist eine optische ansprechende Gestaltung erwünscht und gleichzeitig aber auch eine Haltbarkeit der Komponenten erforderlich. Insbesondere die sichtbaren Sichtteile und noch mehr die regelmäßig einer Berührung ausgesetzten Sichtteile, beispielsweise die Eingabeteile von Bedienelementen unterliegen starken Beanspruchungen und stark schwankenden Temperatureinflüssen, so dass hohe Anforderungen an die mechanische Stabilität der Sichtteile gestellt sind. Diese Sichtteile werden regelmäßig in einem speziellen formgebenden Verfahren, dem sogenannten Film Insert Molding (FIM) hergestellt. Damit lassen sich in nur einem Arbeitsgang komplex geformte Kunststoffbauteile herstellen, die mit einer dekorierten oder funktionalen Folie ausgestattet sind. Dazu wird eine meist durch Bedrucken rückseitig dekorierte Kunststoff-Folie umgeformt, beschnitten und der resultierende Vorformling in ein Spritzgießwerkzeug gelegt und mit einem Thermoplasten hinterspritzt. Das allgemein auch "Folienhinterspritzen" genannte Verfahren macht also separate Prozessschritte zur nachträglichen Dekorierung und Funktionalisierung von Bauteilen wie etwa ein Beschichten oder Lackieren überflüssig. Dadurch ergeben sich erhebliche Einsparungen in punkto Fertigungskosten, Zeit und Anlageninvestitionen sowie eine große Flexibilität.

Die dekorierte Folie ist für das Aussehen des Bauteils verantwortlich. Über sie können neben dem Dekor (einfarbig, mehrfarbig, Metallic-Effekte, integrierte Symbole, Durchlichttechnik) auch der Oberflächeneindruck (glänzend, strukturiert, matt) und der Tiefenglanz gesteuert werden. Wie bei kaum einem anderen Verfahren kann das Teiledekor schnell ohne Produktionsstopp gewechselt werden, indem man von Schuss zu Schuss unterschiedlich bedruckte Folien einsetzt. Weitere Eigenschaften wie eine hohe Medien- oder UV-Beständigkeit, Kratz- und Abriebfestigkeit, eine elektrische Leitfähigkeit oder Softtouch können mit speziellen Verbund- oder beschichteten Folien verwirklicht werden.

Aus optischen Gründen erstreckt sich dabei die Folie in der Regel vollflächig über die gesamte Oberfläche des Substrats und bildet alleine die Sichtfläche, d.h. die dem Bediener zugewandte Oberfläche, des Sichtteils aus. Somit ist die Folie bezogen auf die Oberfläche des Substrats deckungsgleich zugeschnitten und der die Oberfläche begrenzende Rand des Substrats fällt mit den Kanten der Folie zusammen. Dies stellt hohe Anforderungen an genaue Positionierung der Folie relativ zum Substrat. Alternativ könnten die Symbole aus der bedruckten Folie der Kontur des Symbols folgend exakt ausgeschnitten werden. Dies kompliziert aber die Positionierung der folienförmigen Symbole relativ zum Substrat, insbesondere im formgebenden Werkzeug für das Folienhinterspritzen und stellt hohe Anforderungen an den Zuschnitt der Folie, nicht nur wenn die Symbole nicht durch geschlossene Flächen darstellbar sind. Es besteht daher Bedarf nach einer Möglichkeit, auf den bezogen auf die Oberfläche des Substrats kantengenauen Zuschnitt der Folie verzichten zu können, ohne dass es zu einer optischen Beeinträchtigung kommt.

Der Erfindung liegt die Aufgabe zu Grunde, ein Sichtteil insbesondere für Kraftfahrzeugen zu entwickeln, dass vergleichsweise einfach und preiswert herzustellen ist, ohne die optische Erscheinung zu beeinträchtigen. Diese Aufgabe wird durch ein Sichtteil gemäß Anspruch 1 gelöst. Ein gleichermaßen vorteilhaftes Herstellungsverfahren ist Gegenstand des nebengeordneten Anspruchs. Vorteilhafte Ausgestaltungen sind den Unteransprüchen zu entnehmen. Es ist darauf hinzuweisen, dass die in den Patentansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft ein Sichtteil für ein Kraftfahrzeug. Das Sichtteil weist ein Substrat auf. Das Substrat definiert eine dem Betrachter zugewandte Oberfläche. Das Sichtteil weist ferner eine transparente oder transluzente Folie auf, die auf der Oberfläche vollflächig aber die Oberfläche nur partiell überdeckend unter Ausbildung einer umlaufenden Kante aufgebracht ist, so dass Substrat und Folie gemeinsam eine Sichtfläche definieren. Erfindungsgemäß fällt die Kante der Folie an keiner Stelle mit dem Rand der Oberfläche des Substrats zusammen. Beispielsweise ist ein Abstand von einigen Millimetern zwischen der Kante der Folie und dem Rand der Oberfläche des Substrats vorgesehen. Zur optischen Verschleierung der Kanten der Folie weist die Folie eine erste, entlang der Kante sich erstreckende und an die Kante angrenzende Rasterbedruckung auf. Erfindungsgemäß weist die Rasterbedruckung einen angrenzend an die Kante angeordneten Bereich auf, in dem die Dichte der Rasterbedruckung von innen nach außen hin abnimmt, bevorzugt von innen nach außen stetig abnimmt. Anders ausgedrückt: die Lichtdurchlässigkeit nimmt von außen nach innen zu.

Anders ausgedrückt zur Bereitstellung eines "verdeckten" Übergangs betreffend den Farbübergang von der Folie zu dem die Folie überragenden Bereich der Oberfläche des Substrats ist eine Rasterbedruckung auf der Folie vorgesehen. Zur besseren optischen Verschleierung des Kantenverlaufs der Folie variiert die Dichte der Rasterbedruckung im äußeren Kantenbereich hin zur Kante, nimmt nämlich hin zur Kante stetig ab, wodurch die Lichtdurchlässigkeit zur Kante hin ansteigt.

Durch die Rasterbedruckung, insbesondere mit variierendem Rastertonwert, wird im Vergleich zur an der Kante unbedruckten Folie somit ein optischer Übergangsbereich geschaffen, durch den der eigentliche scharfe, durch die Kante definierte Übergang optisch in den Hintergrund tritt und nahezu verschwindet. Dadurch kann im Vergleich zur mit der Sichtfläche deckungsgleichen Auslegung der Folie Folienmaterial nunmehr eingespart werden, ohne die optische Attraktivität des Sichtteils zu beeinträchtigen. Ein separater Formgebungsschritt für die Folie kann bei dem erfindungsgemäßen Verfahren entfallen. Darüber hinaus können Schrumpfungsprozesse der Folie beispielsweise bei deren Formgebung in einem Formungsschritt vernachlässigt werden.

Beispielsweise ist die Folie vollflächig einfarbig mit Rasterbedruckung bedruckt und weist zumindest im an die Kante der Folie angrenzenden Randbereich von einigen Millimetern die Rasterbedruckung mit variierendem, d.h. von innen nach außen abnehmendem Rastertonwert auf. Beispielsweise beträgt die Breite des Bereichs, in dem die Rasterbedruckung einen variierenden Rastertonwert aufweist, 2,0 bis 6,0 mm.

Die Rasterbedruckung ist beispielsweise im Siebdruck, im Digital- oder Offsetdruck auf die Folie insbesondere auf die dem Substrat zugewandte, d.h. der Sichtfläche abgewandten Oberfläche der Folie aufgebracht.

Bei der Folie handelt es sich beispielsweise um eine Polycarbonatfolie, eine Blendfolie aus Polycarbonat und Polyester oder eine Extrusionsfolie auf Basis eines Polycarbonat/PBT(Polybutylenterephthaiat)-Blends, eine Extrusionsfolie aus ABS (Polymerisat aus Acrylnitril-Butadien-Styrol) oder dergleichen. Die Dicke der Folie beträgt beispielsweise 100 bis 500 µm.

Bevorzugt weist die Folie eine weitere Bedruckung auf, die beispielsweise entfernt der Kante angeordnet ist und ein Symbol darstellt.

Erfindungsgemäß weist die entlang der Kante sich erstreckende Rasterbedruckung einen Farbton auf, der der des Materials des Substrats entspricht. Bevorzugt ist der Farbton schwarz. Als ein entsprechender Farbton wird beispielsweise eine identische Farbkoordinate im selben Farbraum, wie CYMK oder RGB, oder ein identisches Farbmuster aus den Farbkatalogen wie RAL oder Pantone verstanden. Dabei können Sättigung und Helligkeit abweichend ausfallen.

Gemäß einer bevorzugten Ausgestaltung ist das Substrat aus einem Kunststoff, wie einem Thermoplast.

Zur zahlenmäßigen Erfassung und Definition bestimmter flächenvariabler binärer Bildinformationen dient der Rastertonwert F in Prozent auf der Folie. Er gibt das Verhältnis einer bestimmten, mit Rasterpunkten bedeckten Fläche zur transparenten Folie an: unbedruckte Folie = 0%, Vollton = 100%. Beispiel: Bei einem Rastertonwert von 50% ist genau die Hälfte der Fläche (beispielsweise schachbrettartig) mit Rasterpunkten bedeckt, bei der anderen Hälfte ist die Folie unbedruckt d.h. transparent.

Bevorzugt liegt der Rastertonwert bezogen auf die mit der Rasterbedruckung versehenen Folienfläche im Bereich von 50 % bis 80 %, bevorzugter im Bereich von 60 % bis 70 %, noch bevorzugter im Bereich von 62 % bis 67 %.

Bevorzugt ist eine Schicht aus transparentem oder transluzentem Material vorgesehen, die angrenzend an die Sichtfläche von Folie und Substrat angeordnet ist, um die Folie und das Substrat zu schützen.

Bevorzugt ist das Sichtteil durch Hinterspritzen der Folie mit dem Material des Substrats in einem formgebenden Verfahren, wie dem Film Insert Molding, hergestellt. In einer weiteren Ausgestaltung ist ferner ein Vorderspritzen der Folie mit einem weiteren, transparenten oder transluzenten Material vorgesehen, um die vorgenannte Schicht auszubilden, die angrenzend an die Sichtfläche von Folie und Substrat angeordnet ist.

Bevorzugt ist die durch die Folie, insbesondere die durch das Substrat und die Folie, definierte Sichtfläche nicht eben ausgestaltet.

Die Erfindung betrifft die Verwendung des Sichtteils in einer der zuvor beschriebenen Ausführungsformen in einem Kraftfahrzeug, insbesondere als Teil eines Bedienelements in einem Kraftfahrzeug. Beispielsweise handelt es sich um ein Eingabeteil eines Bedienelements, d.h. ein für die betätigende Berührung durch die Hand oder den Finger eines Bedieners bestimmtes Teil eines Bedienelements.

Die Erfindung betrifft ferner ein Verfahren zur Herstellung eines Sichtteils, welches eine Sichtfläche definiert und eine Folie und ein Substrat aufweist. Das Verfahren weist folgende Schritte auf. In einem Bereitstellungsschritt wird eine Folie bereitgestellt. Bei der Folie handelt es sich beispielsweise um eine Polycarbonatfolie, eine Blendfolie aus Polycarbonat und Polyester oder eine Extrusionsfolie auf Basis eines Polycarbonat/PBT(Polybutylenterephthalat)-Blends, eine Extrusionsfolie aus ABS (Polymerisat aus Acrylnitril-Butadien-Styrol) oder dergleichen. Die Dicke der Folie beträgt beispielsweise 100 bis 500 µm.

In einem Bedruckungsschritt erfolgt ein Bedrucken der Folie in einem oder mehreren Siebdruckschritten mit wenigstens einer Rasterbedruckung unter Ausbildung wenigstens einer Druckschicht. Bevorzugt wird die Folie lediglich einseitig bedruckt.

In einem nachfolgenden, optionalen Verformungsschritt erfolgt ein Verformen der Folie durch Thermoformen, Hydroforming, mechanische Verformung oder Hochdruckverformung (HPF).

In einem nachfolgenden Zuschnitt erfolgt ein Beschneiden der Folie durch manuelles Beschneiden, wie Stanzen, oder durch Bandstahlschnitt oder durch ein Vollschnittwerkzeug oder durch Wasserstrahl- oder Laserschneiden,

Nachfolgend erfolgt ein Einlegen der Folie in ein formgebendes Werkzeug derart, dass die Folie in einem nachfolgenden Hinterspritzschritt auf einer Oberfläche des Substrats, mit wenigstens einer der Druckschichten zum Substrat gewandt, vollflächig zum Anliegen kommt.

In dem nachfolgenden Hinterspritzschritt erfolgt ein Hinterspritzen der Folie mit einem Material des Substrats unter Ausbildung des Sichtteils, wobei die Folie die Oberfläche nur partiell überdeckend unter Ausbildung einer umlaufenden Kante auf das Substrat aufgebracht ist, so dass das Substrat und die Folie gemeinsam die Sichtfläche ausbilden und die Rasterbedruckung entlang der Kante sich erstreckend und angrenzend an die Kante angeordnet ist. Zur besseren optischen Verschleierung des Kantenverlaufs der Folie variiert der Rastertonwert der Rasterbedruckung im äußeren Kantenbereich hin zur Kante, nimmt nämlich hin zur Kante der Folie ab.

Danach erfolgt die Entnahme des Sichtteils aus dem formgebenden Werkzeug.

Durch die Rasterbedruckung, insbesondere mit variierendem Rastertonwert, wird im Vergleich zur an der Kante unbedruckten Folie somit ein optischer Übergangsbereich geschaffen, durch den der eigentliche Kantenübergang optisch in den Hintergrund tritt und nahezu verschwindet. Dadurch kann im Vergleich zur mit der Sichtfläche deckungsgleichen Auslegung der Folie bei dem erfindungsgemäßen Verfahren Folienmaterial eingespart werden, ohne die optische Attraktivität des Sichtteils zu beeinträchtigen. Darüber hinaus können Schrumpfungsprozesse der Folie beispielsweise bei deren Formgebung in einem Formungsschritt vernachlässigt werden.

Die Erfindung wird anhand der nachfolgenden Figuren näher erläutert. Die Figuren sind dabei nur beispielhaft zu verstehen und stellen lediglich bevorzugte Ausführungsvarianten dar. Es zeigen:
- Figur 1: eine Aufsicht auf eine erfindungsgemäße Ausführungsform des Sichtteils;
- Figur 2: eine Schnittansicht durch die Ausführungsform der Figur 1;
- Figur 3: eine Detailansicht der Folie 3 aus Figur 1;
- Figur 4: eine Detailansicht einer alternativen Ausführungsform der Folie 3 aus Figur 1;
- Figur 5: eine Schnittansicht durch eine weitere Ausführungsform des Sichtteils.

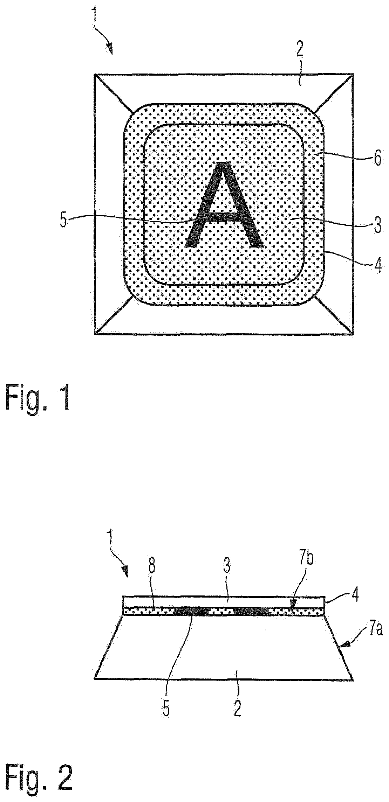

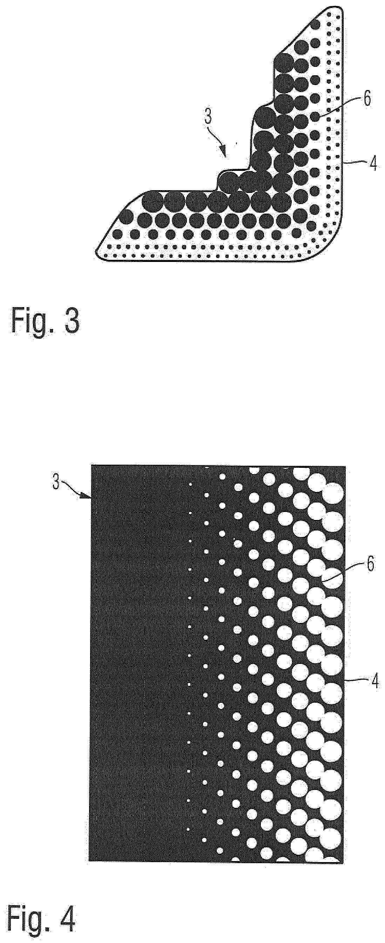

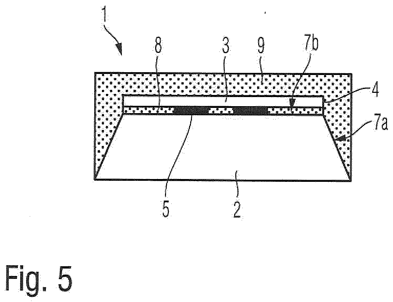

Das erfindungsgemäße Sichtteil 1 weist eine transparente Folie 3, die auf einer Teiloberfläche 7b der Oberfläche 7a, 7b eines Substrat 2 aus einem Thermoplast aufgebracht ist. Dabei bedeckt die Folie 3 das Substrat 2 lediglich partiell, so dass die von der Folie 3 nicht bedeckte, über die Kante 4 der Folie 3 hinausragende Teiloberfläche 7a des Substrats 2 und die Folie 3 gemeinsam die Sichtfläche des Sichtteils 1 ausbilden. Die Folie 3 ist somit kleiner als die Sichtfläche des Sichtteils 1 und deren Kante 4 liegt innerhalb der Sichtfläche. Die Folie 3 dient als Träger für ein Symbol 5, das durch rückwärtige Bedruckung, d.h. der dem Substrat 2 zugewandten Seite der Folie 3, wie Figur 2 zeigt, aufgebracht ist. Neben der Bedruckung mit dem Symbol 5 ist die rückwärtige Seite der Folie 2 mit einer Rasterbedruckung 8 bedruckt, die sich entlang der Kante 4 und angrenzend an diese erstreckt. Die Rasterbedruckung 8 aus opakem Material, wie Lack, weist einen Farbton, wie schwarz auf, die der des Substrats entspricht. Die Rasterbedruckung 8 ist im vorliegenden Fall vollflächig auf der Folie 3 aufgebracht, weist aber einen angrenzend an die Kante 4 angeordneten Bereich 6 auf, in der der die Dichte der Rasterbedruckung 8 und damit die Lichtdurchlässigkeit der Folie 3 variiert. Dies ist in Figur 3 schematisch veranschaulicht. So nimmt die Dichte der Rasterbedruckung 8 im Bereich 6 innen nach außen ab. Anders ausgedrückt, die Lichtdurchiässigkeit nimmt im Bereich 6 hin zur Kante 4 zu. Der Rastertonwert der Rasterbedruckung 8 beträgt 65%. Die Rasterbedruckung 8 wird durch eine Bedruckung mit Punkten aus opakem Material der transparenten Folie 3 erreicht, wobei die Dichte und damit die Lichtdurchlässigkeit durch Variation der Punktgröße und der Beabstandung der Punkte bereichsweise eingestellt wird. Eine alternative Ausführungsform ist in Figur 4 gezeigt, bei der eine Rasterbedruckung 8 aus opakem Material, wie Lack, gewählt ist, bei der transparente Punkte außerhalb des bedruckten Bereichs verbleiben, deren Durchmesser zur Kante 4 hin zu nehmen. Durch die Rasterbedruckung 8, insbesondere mit variierender Dichte, wird im Vergleich zur an der Kante 4 unbedruckten Folie 3 somit ein optischer Übergangsbereich geschaffen, durch den der eigentliche scharfe, durch die Kante 4 definierte Übergang zwischen Folie 3 und Substrat 2 optisch in den Hintergrund tritt und nahezu verschwindet. Ferner kann im Vergleich zu einer mit der Sichtfläche deckungsgleichen Auslegung der Folie 3 Folienmaterial eingespart werden, ohne die optische Attraktivität des Sichtteils 1 zu beeinträchtigen. Folie 3 und Substrat 2 sind kraftschlüssig durch sogenanntes Film Insert Molding, d.h. Hinterspritzen der Folie 3 mit dem Material des Substrats 2 in einem formgebenden Werkzeug verbunden. Figur 5 zeigt eine weitere Ausführungsform des Sichtteils 1. Dieses zeigt im Unterschied zur Ausführungsform der Figur 1 ferner eine Schicht 9 aus transparentem oder transluzentem Material, welche angrenzend an die von der Folie 3 und dem Substrat 2 ausgebildeten Sichtfläche angeordnet ist und weiche die dem Bediener zugewandte Oberfläche des Sichtteils 1 definiert. Die Schicht 9 wird durch Vorderspritzen der Folie 3 mit einem transparenten Material ausgebildet.

## Patentansprüche

1. Sichtteil (1) mit einer Sichtfläche für ein Kraftfahrzeug, aufweisend:
ein Substrat (2); welches eine Oberfläche (7a, 7b) definiert;
eine transparente oder transluzente Folie (3), die auf der Oberfläche (7a, 7b) vollflächig aber die Oberfläche (7a, 7b) nur partiell überdeckend unter Ausbildung einer umlaufenden Kante (4) aufgebracht ist;
wobei die Folie (3) eine entlang ihrer Kante (4) sich erstreckende, an die Kante (4) angrenzend angeordnete Rasterbedruckung (8) aufweist,
wobei das Substrat (2) und die Folie (3) gemeinsam die Sichtfläche ausbilden und die Kante (4) der Folie (3) an keiner Stelle mit einem Rand der Oberfläche (7a, 7b) des Substrats (2) zusammenfällt; wobei die Rasterbedruckung (8) einen angrenzend an die Kante (4) angeordneten Bereich (6) aufweist, in dem die Dichte der Rasterbedruckung (8) von innen nach außen abnimmt und wobei die Rasterbedruckung (8) einen Farbton aufweist, der der des Substrats (2) entspricht.

2. Sichtteil (1) nach dem vorhergehenden Anspruch, wobei die Folie (3) eine weitere Bedruckung (5) aufweist, die ein Symbol darstellt.

3. Sichtteil (1) nach dem vorhergehenden Anspruch, wobei der Farbton schwarz ist.

4. Sichtteil (1) nach einem der vorhergehenden Ansprüche, wobei die Folie (3) eine Polycarbonatfolie, eine Blendfolie aus Polycarbonat und Polyester oder eine Extrusionsfolie auf Basis eines Polycarbonat-/PBT-Blend oder eine Extrusionsfolie aus ABS ist.

5. Sichtteil (1) nach einem der vorhergehenden Ansprüche, wobei das Substrat (2) aus einem Kunststoff, wie einem Thermoplast, ist.

6. Sichtteil (1) nach einem der vorhergehenden Ansprüche, wobei der Rastertonwert der Rasterbedruckung (8) im Bereich 50 % bis 80 %, bevorzugt 60 % bis 70 %, noch bevorzugt 62 % bis 67 % beträgt.

7. Sichtteil (1) nach einem der vorhergehenden Ansprüche, mit einer Schicht (9) aus transparentem oder transluzentem Material, die angrenzend an die Sichtfläche von Folie (3) und Substrat (2) angeordnet ist.

8. Verwendung des Sichtteils (1) nach einem der vorhergehenden Ansprüche in einem Kraftfahrzeug, insbesondere als Teil eines Bedienelements in einem Kraftfahrzeug.

9. Verfahren zur Herstellung eines Sichtteils (1) mit einer Sichtfläche, wobei das Sichtteil (1) eine Folie (3) und ein Substrat (2) aufweist, mit den Schritten:
• Bereitstellen einer Folie (3);
• Bedrucken der Folie (3) in einem oder mehreren Siebdruckschritten mit wenigstens einer Rasterbedruckung (8) unter Ausbildung wenigstens einer Druckschicht;
• Optionales Verformen der Folie (3) durch Thermoformen, Hydroforming, mechanische Verformung oder Hochdruckverformung (HFP);
• Beschneiden der Folie (3) durch manuelles Beschneiden, wie Stanzen, oder Bandstahlschnitt oder mittels Vollschnittwerkzeug oder mittels Wasserstrahl oder durch Laserschneiden;
• Einlegen der Folie (3) in ein formgebendes Werkzeug derart, dass die Folie (3) in einem nachfolgenden Schritt des Hinterspritzens auf einer Oberfläche (7a, 7b) des Substrats (2) mit der Druckschicht zum Substrat (2) gewandt vollflächig zum Anliegen kommt;
• Hinterspritzen der Folie (3) mit dem Material des Substrats (2) unter Ausbildung des Sichtteils (1); wobei die Folie (3) die Oberfläche (7a, 7b) des Substrats (2) nur partiell überdeckend unter Ausbildung einer umlaufenden Kante (4) auf das Substrat aufgebracht ist, und die Rasterbedruckung (8) entlang der Kante (4) sich erstreckend und angrenzend an die Kante (4) angeordnet ist;
• Entnahme des Sichtteils (1) aus dem formgebenden Werkzeug, wobei das Substrat (2) und die Folie (3) gemeinsam die Sichtfläche ausbilden und die Kante (4) der Folie (3) an keiner Stelle mit einem Rand der Oberfläche (7a, 7b) des Substrats (2) zusammenfällt; wobei die Rasterbedruckung (8) einen angrenzend an die Kante (4) angeordneten Bereich (6) aufweist, in dem die Dichte der Rasterbedruckung (8) von innen nach außen abnimmt und wobei die Rasterbedruckung (8) einen Farbton aufweist, der der des Substrats (2) entspricht.

10. Verfahren zur Herstellung eines Sichtteils (1) gemäß dem vorhergehenden Anspruch; mit einem Schritt des Vorderspritzens wenigstens der Folie (3) mit einem weiteren, transparenten oder transluzenten Material zur Ausbildung einer an die Folie (3) angrenzenden Schicht (9).

## Claims

1. Visible part (1) having a visible face for a motor vehicle, comprising:
a substrate (2); which defines a surface (7a, 7b);
a transparent or translucent film (3), which is applied to the surface (7a, 7b) over all of its surface area but such that it only partially covers the surface (7a, 7b), resulting in the formation of a peripheral edge (4);
wherein the film (3) comprises a printed pattern (8), which extends along its edge (4) and is arranged adjacent to the edge (4), wherein the substrate (2) and the film (3) together form the visible face and the edge (4) of the film (3) does not coincide with a border of the surface (7a, 7b) of the substrate (2) at any point; wherein
the printed pattern (8) has a region (6) which is arranged adjacent to the edge (4) and in which the density of the printed pattern (8) decreases from the inside to the outside, and wherein the printed pattern (8) has a colour tone which corresponds to that of the substrate (2).

2. Visible part (1) according to the preceding claim, wherein the film (3) has a further printing (5), which represents a symbol.

3. Visible part (1) according to either one of the preceding claims, wherein the colour tone is black.

4. Visible part (1) according to one of the preceding claims, wherein the film (3) is a polycarbonate film, a blend film of polycarbonate and polyester or an extrusion film based on a polycarbonate/PBT blend or an extrusion film of ABS.

5. Visible part (1) according to one of the preceding claims, wherein the substrate (2) is made from a plastic, such as a thermoplastic.

6. Visible part (1) according to one of the preceding claims, wherein the pattern tonal value of the printed pattern (8) is in the range of 50% to 80%, preferably 60% to 70%, even more preferably 62% to 67%.

7. Visible part (1) according to one of the preceding claims, having a layer (9) of transparent or translucent material, which is arranged adjacent to the visible face of film (3) and substrate (2).

8. Use of the visible part (1) according to one of the preceding claims in a motor vehicle, in particular as part of an operating element in a motor vehicle.

9. Method for producing a visible part (1) having a visible face, wherein the visible part (1) comprises a film (3) and a substrate (2), having the following steps:
• providing a film (3);
• printing the film (3) in one or more screen printing steps with at least one printed pattern (8), resulting in the formation of at least one printed layer;
• optionally deforming the film (3) by thermoforming, hydroforming, mechanical deformation or high-pressure forming (HFP);
• cutting the film (3) by manual cutting, such as punching, or band steel cutting or by means of a full thickness cutting tool or by means of a water jet or by laser cutting;
• placing the film (3) into a shaping tool in such a way that, in a subsequent back-moulding step, the film (3) comes to lie over all of its surface area on a surface (7a, 7b) of the substrate (2) with the printed layer facing the substrate (2);
• back-moulding the film (3) with the material of the substrate (2), resulting in the formation of the visible part (1); wherein the film (3) is applied to the substrate so that it only partially covers the surface (7a, 7b) of the substrate (2), resulting in the formation of a peripheral edge (4), and the printed pattern (8) is arranged such that it extends along the edge (4) and is adjacent to the edge (4);
• removing the visible part (1) from the shaping tool, wherein the substrate (2) and the film (3) together form the visible face and the edge (4) of the film (3) does not coincide with a border of the surface (7a, 7b) of the substrate (2) at any point; wherein the printed pattern (8) has a region (6) which is arranged adjacent to the edge (4) and in which the density of the printed pattern (8) decreases from the inside to the outside, and wherein the printed pattern (8) has a colour tone which corresponds to that of the substrate (2).

10. Method for producing a visible part (1) according to the preceding claim, having a step of front-moulding at least the film (3) with a further, transparent or translucent material to form a layer (9) adjoining the film (3).

## Revendications

1. Partie visible (1) munie d'une surface visible pour un véhicule automobile, comprenant :
un substrat (2) ; qui définit une surface (7a, 7b) ;
un film transparent ou translucide (3), qui est appliqué sur la surface (7a, 7b) sur toute sa surface mais qui ne recouvre que partiellement la surface (7a, 7b) en formant un bord circonférentiel (4) ;
le film (3) présentant une impression tramée (8) s'étendant le long de son bord (4), agencée de manière adjacente au bord (4),
le substrat (2) et le film (3) formant ensemble la surface visible et le bord (4) du film (3) ne coïncidant à aucun endroit avec un bord de la surface (7a, 7b) du substrat (2) ; l'impression tramée (8) présentant une zone (6) agencée de manière adjacente au bord (4), dans laquelle la densité de l'impression tramée (8) diminue de l'intérieur vers l'extérieur, et l'impression tramée (8) présentant une teinte qui correspond à celle du substrat (2).

2. Partie visible (1) selon la revendication précédente, dans laquelle le film (3) présente une autre impression (5), qui représente un symbole.

3. Partie visible (1) selon l'une quelconque des revendications précédentes, dans laquelle la teinte est noire.

4. Partie visible (1) selon l'une quelconque des revendications précédentes, dans laquelle le film (3) est un film en polycarbonate, un film mixte en polycarbonate et polyester ou un film extrudé à base d'un mélange de polycarbonate/PBT ou un film extrudé en ABS.

5. Partie visible (1) selon l'une quelconque des revendications précédentes, dans laquelle le substrat (2) est en une matière plastique, telle qu'un thermoplastique.

6. Partie visible (1) selon l'une quelconque des revendications précédentes, dans laquelle la valeur de teinte de trame de l'impression tramée (8) est dans la plage allant de 50 % à 80 %, de préférence de 60 % à 70 %, de manière encore préférée de 62 % à 67 %.

7. Partie visible (1) selon l'une quelconque des revendications précédentes, munie d'une couche (9) de matériau transparent ou translucide, qui est agencée de manière adjacente à la surface visible du film (3) et du substrat (2).

8. Utilisation de la partie visible (1) selon l'une quelconque des revendications précédentes dans un véhicule automobile, notamment en tant que partie d'un élément de commande dans un véhicule automobile.

9. Procédé de fabrication d'une partie visible (1) munie d'une surface visible, la partie visible (1) présentant un film (3) et un substrat (2), comprenant les étapes suivantes :
- la fourniture d'un film (3) ;
- l'impression du film (3) en une ou plusieurs étapes de sérigraphie avec au moins une impression tramée (8) en formant au moins une couche d'impression ;
- la déformation optionnelle du film (3) par thermoformage, hydroformage, déformation mécanique ou déformation sous haute pression (HFP),
- le découpage du film (3) par découpage manuel, tel que poinçonnage, ou découpage au feuillard d'acier, ou au moyen d'un outil de coupe intégrale, ou au moyen d'un jet d'eau, ou par découpage au laser ;
- l'insertion du film (3) dans un outil de façonnage de telle sorte que le film (3) vienne s'appliquer sur toute sa surface sur une surface (7a, 7b) du substrat (2) avec la couche d'impression tournée vers le substrat (2) lors d'une étape ultérieure de surmoulage par injection arrière ;
- le surmoulage par injection arrière du film (3) avec le matériau du substrat (2) en formant la partie visible (1); le film (3) étant appliqué sur le substrat en ne recouvrant que partiellement la surface (7a, 7b) du substrat (2) en formant un bord circonférentiel (4), et l'impression tramée (8) étant agencée en s'étendant le long du bord (4) et de manière adjacente au bord (4) ;
- l'extraction de la partie visible (1) de l'outil de façonnage, le substrat (2) et le film (3) formant ensemble la surface visible et le bord (4) du film (3) ne coïncidant à aucun endroit avec un bord de la surface (7a, 7b) du substrat (2) ; l'impression tramée (8) présentant une zone (6) agencée de manière adjacente au bord (4), dans laquelle la densité de l'impression tramée (8) diminue de l'intérieur vers l'extérieur, et l'impression tramée (8) présentant une teinte qui correspond à celle du substrat (2).

10. Procédé de fabrication d'une partie visible (1) selon la revendication précédente ; comprenant une étape de surmoulage par injection frontale d'au moins le film (3) avec un autre matériau transparent ou translucide pour former une couche (9) adjacente au film (3).
